# EUROPÄISCHE PATENTSCHRIFT

(11) **EP 3 591 115 B1**
(45) Veröffentlichungstag und Bekanntmachung des Hinweises auf die Patenterteilung: **28.02.2024**
(21) Anmeldenummer: 19178405.7
(22) Anmeldetag: 05.06.2019
(51) Int. Cl.: D06F 39/14, B29C 45/14

(54) **WÄSCHEPFLEGEGERÄT MIT EINER GERÄTETÜR**
LAUNDRY CARE DEVICE WITH A DEVICE DOOR
APPAREIL D'ENTRETIEN DU LINGE DOTÉ D'UNE PORTE D'APPAREIL

(30) Priorität: 02.07.2018 DE 102018210860
(43) Veröffentlichungstag der Anmeldung: 08.01.2020
(73) Patentinhaber: BSH Hausgeräte GmbH, 81739 München (DE)
(72) Erfinder: Loui, Carsten, 13187 Berlin (DE); Schlaß, Alexander, 14624 Dallgow-Döberitz (DE); Seider, Christian, 10709 Berlin (DE)

(56) Entgegenhaltungen:
- EP-A1- 3 000 925
- KR-A- 20030 068 297
- KR-A- 20030 068 299
- KR-A- 20150 066 140
- KR-B1- 101 139 616

## Beschreibung

Die vorliegende Erfindung betrifft ein Wäschepflegegerät mit einer Gerätetür.

In herkömmlichen Wäschepflegegeräten werden Gerätetüren verwendet, um eine Gehäuseöffnung eines Gehäuses des Wäschepflegegerätes zu verschließen. Der Nutzer des Wäschepflegegeräts kann beispielsweise durch ein Türfenster der Gerätetür in den Gehäuseinnenraum blicken, um z.B. den Fortschritt eines Wäschepflegevorgangs zu verfolgen. Herkömmliche Türfenster sind im Allgemeinen aus Glas geformt.

In der EP 2 596 160 B1 ist eine Waschmaschine mit einer Gerätetür offenbart, welche einstückig aus Kunststoff durch einen Gasinjektionsprozess hergestellt ist.

In der EP 3 249 092 A1 ist eine Waschmaschine mit einer Gerätetür offenbart, welche eine innere Türschale auf Kunststoff und eine äußere Türschale aus Metall aufweist.

In der EP 3 000 925 A1 ist ein Wäschepflegegerät mit einer Gerätetür offenbart, wobei die Gerätetür ein Türfenster aufweist. Das Türfenster ist aus einem lichttransparenten Glas geformt und weist eine Beschichtung auf, die das Türfenster lichtdurchlässig werden lässt, wenn das Türfenster von einer Lichtquelle bestrahlt wird und die das Türfenster lichtundurchlässig werden lässt, wenn das Türfenster nicht bestrahlt wird.

Die Patentschrift KR 101 139 616 B1 offenbart ein Verfahren zum Herstellen eines Sicherheitsglases.

Es ist die der Erfindung zugrundeliegende Aufgabe, ein Wäschepflegegerät mit einer vorteilhaften Gerätetür zum Verschleißen einer Gehäuseöffnung des Wäschepflegegeräts anzugeben.

Diese Aufgabe wird durch den Gegenstand mit den Merkmalen nach dem unabhängigen Anspruch gelöst. Vorteilhafte Ausführungsformen sind Gegenstand der abhängigen Ansprüche, der Beschreibung und der Zeichnungen.

Gemäß einem ersten Aspekt wird die erfindungsgemäße Aufgabe durch ein Wäschepflegegerät, mit einem Gehäuse, welches einen Gehäuseinnenraum von einem Gehäuseaußenraum abgrenzt, wobei das Gehäuse eine Gehäuseöffnung aufweist, und einer Gerätetür, welche ausgebildet ist, die Gehäuseöffnung zu verschließen, gelöst, wobei die Gerätetür ein Türfenster aufweist, welches aus einem lichttransparenten Glas geformt ist, wobei die Gerätetür eine lichttransparente Kunststoffschicht aufweist, welche auf einer dem Gehäuseaußenraum zugewandten Fensteraußenseite des Türfensters aufgebracht ist.

Dadurch wird der technische Vorteil erreicht, dass die lichttransparente Kunststoffschicht einen wirksamen Schutz gegen Verletzungen durch Glasbruch des Türfensters und eine wirksame Abschirmung des heißen Glases gegen Berührung sicherstellt, da sich das Glas des Türfensters besonders bei Heißwaschgängen stark erwärmen kann.

Bei einem Glasbruch des Türfensters hält die auf das Glas aufgebrachte Kunststoffschicht die Glasbruchstücke zusammen und reduziert dadurch das Risiko von Schnittverletzungen. Zudem bietet die Kunststoffschicht einen Schutz vor Kratzern auf dem Glas während des Transports und bei der Montage.

Die lichttransparente Kunststoffschicht kann einfach und wirksam auf die Fensteraußenseite des Türfensters aufgetragen werden, so dass der Montageaufwand und damit auch die Montagekosten der Gerätetür und damit des gesamten Wäschepflegegeräts reduziert werden.

Darüber hinaus kann durch das Aufbringen der lichttransparenten Kunststoffschicht auf das Türfenster aus Glas auf eine zusätzliche Schutzscheibe, welche in herkömmlichen Wäschepflegegeräten an einer dem Gehäuseaußenraum zugewandten Gerätetüraußenseite der Gerätetür angebracht ist, verzichtet werden.

Insbesondere ist das Türfenster vollständig aus lichttransparentem Glas geformt.

Unter einem Wäschepflegegerät wird ein Gerät verstanden, welches zur Wäschepflege eingesetzt wird, wie z.B. eine Waschmaschine oder ein Wäschetrockner. Insbesondere wird unter solch einem Wäschepflegegerät ein Haushaltswäschepflegegerät verstanden. Also ein Wäschepflegegerät, welches im Rahmen der Haushaltsführung verwendet wird, und mit dem Wäsche in haushaltsüblichen Mengen behandelt wird.

In einer vorteilhaften Ausführungsform des Wäschepflegegeräts bedeckt die lichttransparente Kunststoffschicht die Fensteraußenseite des Türfensters zumindest abschnittsweise, insbesondere vollständig.

Dadurch wird der technische Vorteil erreicht, dass ein wirksamer Schutz eines großen Bereichs, bzw. der gesamten Fensteraußenseite des Türfensters ermöglicht wird.

In einer vorteilhaften Ausführungsform des Wäschepflegegeräts ist die lichttransparente Kunststoffschicht als eine lichttransparente Kunststofffolie, als ein lichttransparenter Kunststofflack, als ein lichttransparentes Kunststoffharz, als eine lichttransparente Kunststoffspritzgussschicht und/oder als ein lichttransparenter Kunststoffschaum ausgebildet.

Dadurch wird der technische Vorteil erreicht, dass eine lichttransparente Kunststofffolie einfach auf das Glas des Türfensters aufgeklebt werden kann, dass das Glas des Türfensters mittels eines lichttransparenten Kunststofflacks vorteilhaft lackiert werden kann, bzw. ein lichttransparentes Kunststoffharz oder Kunststoffschaum vorteilhaft auf das Glas des Türfensters aufgespritzt werden kann, und dass eine lichttransparente Kunststoffspritzgussschicht vorteilhaft, insbesondere in einem Over-injection Prozess, auf das Glas des Türfensters aufgetragen werden kann.

In einer vorteilhaften Ausführungsform des Wäschepflegegeräts umfasst die lichttransparente Kunststoffschicht Polyurethan, Polymethylmethacrylat (PMMA), Styrolmethylmethacrylat (SMMA), Polycarbonat und/oder Styrol-Acrylnitril (SAN). Dadurch wird der technische Vorteil erreicht, dass Polyurethan, Polymethylmethacrylat (PMMA), Styrolmethylmethacrylat (SMMA), Polycarbonat und/oder Styrol-Acrylnitril (SAN) eine stabile, einfach zu fertigende und vorteilhaft lichttransparente Kunststoffschicht bereitstellen. Insbesondere umfasst die lichttransparente Kunststoffschicht Polyurethan. In einer vorteilhaften Ausführungsform des Wäschepflegegeräts umfasst das lichttransparente Glas des Türfensters Kalknatron und/oder Borosilikat.

Dadurch wird der technische Vorteil erreicht, dass das aus Kalknatron und/oder Borosilikat gefertigte lichttransparente Glas eine wirksame Wärmebeständigkeit aufweist und vorteilhaft gefertigt werden kann.

Gemäß der Erfindung ist die lichttransparente Kunststoffschicht als ein die Gehäuseöffnung umlaufendes Außendichtelement geformt, um in einem geschlossenen Zustand der Gerätetür den Austritt von Waschflüssigkeit aus der Gehäuseöffnung zu reduzieren.

Dadurch wird der technische Vorteil erreicht, dass bei einem Bruch des Glases des Türfensters die außen auf dem Türfenster angebrachte Kunststoffschicht weiterhin eine wirksame fluidtechnische Abdichtung bereitstellen kann.

In einer vorteilhaften Ausführungsform des Wäschepflegegeräts ist die lichttransparente Kunststoffschicht als eine gehärtete Kunststoffschicht ausgebildet, wobei die gehärtete Kunststoffschicht insbesondere kratzfest ist.

Dadurch wird der technische Vorteil erreicht, dass eine gehärtete, insbesondere kratzfeste, Kunststoffschicht eine Beschädigung des Glases des Türfensters während des Transports, bzw. bei der Montage des Wäschepflegegeräts verhindert.

In einer vorteilhaften Ausführungsform des Wäschepflegegeräts weist das Türfenster einen umlaufenden Fensterrand auf, welcher in einem geschlossenen Zustand der Gerätetür an einem die Gehäuseöffnung begrenzenden Öffnungsrand des Gehäuses anliegt, wobei die lichttransparente Kunststoffschicht insbesondere auf einer dem Gehäuseaußenraum zugewandten Fensteraußenseite des umlaufenden Fensterrandes aufgebracht ist.

Dadurch wird der technische Vorteil erreicht, dass die Kunststoffschicht einen wirksamen Schutz des umlaufenden Fensterrands sicherstellt.

In einer vorteilhaften Ausführungsform des Wäschepflegegeräts weist der umlaufende Fensterrand zumindest eine Ausnehmung auf, und weist der umlaufende Fensterrand insbesondere zwei Ausnehmungen auf, welche insbesondere einander gegenüberliegend in dem umlaufenden Fensterrand geformt sind.

Dadurch wird der technische Vorteil erreicht, dass die Ausnehmungen eine wirksame Befestigung des Türfensters bereitstellen.

In einer vorteilhaften Ausführungsform des Wäschepflegegeräts weist das Türfenster einen nach innen gewölbten Mittelbereich auf, welcher sich in einem geschlossenen Zustand der Gerätetür durch die Gehäuseöffnung in den Geräteinnenraum erstreckt, wobei die lichttransparente Kunststoffschicht insbesondere auf einer dem Gehäuseaußenraum zugewandten Fensteraußenseite des Mittelbereichs aufgebracht ist.

Dadurch wird der technische Vorteil erreicht, dass ein großflächiger Schutz der Fensteraußenseite durch die Kunststoffschicht bereitgestellt wird.

In einer vorteilhaften Ausführungsform des Wäschepflegegeräts weist der Mittelbereich des Türfensters eine rückseitige Wandung auf, wobei die rückseitige Wandung durch einen Verbindungsbereich des Türfensters mit einem umlaufenden Fensterrand des Türfensters verbunden ist, wobei sich der Verbindungsbereich in einem geschlossenen Zustand der Gerätetür durch die Gehäuseöffnung in den Geräteinnenraum erstreckt, wobei die lichttransparente Kunststoffschicht insbesondere auf dem Verbindungsbereich, dem umlaufenden Fensterrand und/oder der rückseitigen Wandung aufgebracht ist.

Dadurch wird der technische Vorteil erreicht, dass bestimmte Bereiche der Fensteraußenseite des Türfensters gezielt durch die Kunststoffschicht abgedeckt werden können.

In einer vorteilhaften Ausführungsform des Wäschepflegegeräts weist der umlaufende Fensterrand einen einer Oberseite des Wäschepflegegeräts zugewandten oberen Randbereich und einen einer Unterseite des Wäschepflegegeräts zugewandten unteren Randbereich auf, wobei der Verbindungsbereich einen oberen Verbindungsabschnitt aufweist, welcher den Mittelbereich mit dem oberen Randbereich verbindet, und einen unteren Verbindungsabschnitt aufweist, welcher den Mittelbereich mit dem unteren Randbereich verbindet, wobei die lichttransparente Kunststoffschicht insbesondere auf dem oberen Verbindungsabschnitt, dem unteren Verbindungsabschnitt, dem oberen Randbereich und/oder dem unteren Randbereich aufgebracht ist.

Dadurch wird der technische Vorteil erreicht, dass bestimmte Bereiche des umlaufenden Fensterrands, bzw. des Verbindungsbereichs durch die Kunststoffschicht abgedeckt werden können.

In einer vorteilhaften Ausführungsform des Wäschepflegegeräts sind der obere Verbindungsabschnitt gegenüber dem oberen Randbereich und der untere Verbindungsabschnitt gegenüber dem unteren Randbereich unterschiedlich stark geneigt.

Dadurch wird der technische Vorteil erreicht, dass eine vorteilhafte Anpassung der Geometrie des Türfensters an das Gehäuse des Wäschepflegegeräts ermöglicht wird.

In einer vorteilhaften Ausführungsform des Wäschepflegegeräts sind der Fensterrand und/oder der Mittelbereich, insbesondere der obere Verbindungsabschnitt, der untere Verbindungsabschnitt und/oder die rückseitige Wandung, des Türfensters aus einem lichttransparenten Glas geformt.

Dadurch wird der technische Vorteil erreicht, dass der Nutzer durch das Türfenster wirksam in dem Gehäuseinnenraum des Wäschepflegegeräts blicken kann.

In einer vorteilhaften Ausführungsform des Wäschepflegegeräts weist das Türfenster eine konkave Form auf.

Dadurch wird der technische Vorteil erreicht, dass eine vorteilhafte Anpassung der Geometrie des Türfensters eine vorteilhafte Anpassung der Geometrie der Gerätetür an das Gehäuse des Wäschepflegegeräts ermöglicht wird. Insbesondere erstreckt sich ein konkav ausgebildetes Türfenster in einem geschlossenen Zustand der Gerätetür durch eine Gehäuseöffnung des Gehäuses des Wäschepflegegeräts in den Gehäuseinnenraum des Wäschepflegegeräts.

In einer vorteilhaften Ausführungsform des Wäschepflegegeräts ist die lichttransparente Kunststoffschicht stoffschlüssig mit dem Glas des Türfensters der Gerätetür verbunden ist, insbesondere verklebt.

Dadurch wird der technische Vorteil erreicht, dass eine besonders stabile Befestigung zwischen der Kunststoffschicht und dem Glas des Türfensters sichergestellt wird.

In einer vorteilhaften Ausführungsform des Wäschepflegegeräts ist eine dem Geräteaußenraum des Wäschepfleggeräts zugewandte Kunststoffschichtaußenseite der Kunststoffschicht von dem Geräteaußenraum aus direkt zugänglich ist.

Dadurch wird der technische Vorteil erreicht, dass dem Nutzer des Wäschepflegegeräts durch die lichttransparente Kunststoffschicht und durch das lichttransparenter Glas des Türfensters einfach und wirksam in den Geräteinnenraum blicken kann, ohne dass störende Elemente die Sicht behindern. Bei einer direkten Zugänglichkeit der Kunststoffschichtaußenseite verhindert die auf der Fensteraußenseite aufgebrachte lichttransparente Kunststoffschicht, dass sich der Nutzer bei einer Berührung des Türfensters die Hände verbrennt, und dass bei einem Bruch des Glas des Türfensters bei einer unsachgemäßen Bedienung des Türfensters gegebenenfalls Schäden entstehen.

Insbesondere weist die Gerätetür an einer dem Geräteaußenraum des Wäschepfleggeräts zugewandten Gerätetüraußenseite keine Schutzscheibe auf. Dadurch kann insbesondere ein vereinfachter Aufbau der Gerätetür sichergestellt werden.

Ausführungsbeispiele der Erfindung sind in den Zeichnungen dargestellt und werden im Folgenden näher beschrieben.

Es zeigen:
- Fig. 1: eine schematische Ansicht eines Wäschepflegegeräts; und
- Fig. 2A, 2B: perspektivische Darstellungen einer Gerätetür eines Wäschepflegegeräts.

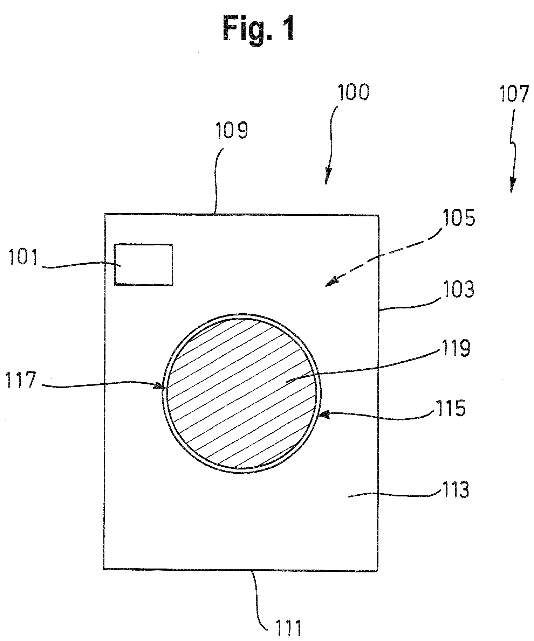

Fig. 1 zeigt eine schematische Ansicht eines allgemeinen Wäschepflegegeräts 100, wie z.B. eine Waschmaschine. Das Wäschepflegegerät 100 umfasst eine Einspülschale 101, in die Waschmittel oder andere flüssige Substanzen eingefüllt werden können. Das Wäschepflegegerät 100 weist ein Gehäuse 103 auf, welches einen in Fig. 1 nur schematisch dargestellten Gehäuseinnenraum 105 von einem Gehäuseaußenraum 107 des Wäschepflegegeräts 100 abgrenzt. Das Gehäuse 103 weist unter anderem eine Oberseite 109, eine Unterseite 111 und eine Vorderseite 113 auf.

In der Vorderseite 113 des Gehäuses 103 ist eine Gehäuseöffnung 115 gebildet, welche durch eine Gerätetür 117 verschlossen wird. Durch die Gerätetür 117 kann der Nutzer des Wäschepflegegeräts 100 das Wäschepflegegerät 100 mit Wäsche beladen. Die Gerätetür 117 weist ein Türfenster 119 aus einem lichttransparenten Glas auf, so dass der Nutzer des Wäschepflegegeräts 100 durch das lichttransparente Türfenster 119 in den Gehäuseinnenraum 105 des Wäschepflegegeräts 100 blicken kann, um z.B. den Fortschritt eines Wäschepflegevorgangs zu verfolgen.

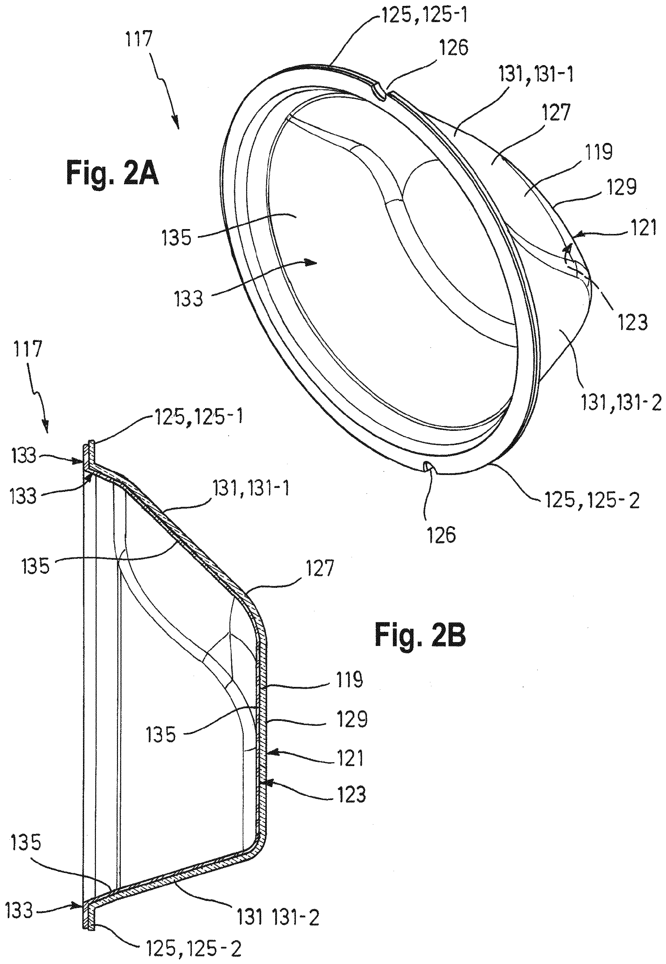

In den Figuren 2A, 2B sind perspektivische Darstellungen einer Gerätetür eines Wäschepflegegeräts gezeigt. In der Fig. 2A ist eine Schrägansicht der Gerätetür 117 gezeigt. In der Fig. 2B ist eine Schnittansicht der Gerätetür 117 gezeigt.

Die Gerätetür 117 weist ein Türfenster 119 auf, welches insbesondere eine konkave Form aufweist, so dass sich in einem geschlossenen Zustand der Gerätetür 117 das Türfenster 119 durch eine Gehäuseöffnung 115 eines Gehäuses 103 des Wäschepflegegeräts 100 in einen Gehäuseinnenraum 105 des Wäschepflegegeräts 100 erstreckt.

Das Türfenster 119 weist eine dem Gehäuseinnenraum 105 des Wäschepflegegeräts 100 zugewandte Fensterinnenseite 121 und eine dem Gehäuseaußenraum 107 des Wäschepflegegeräts 100 zugewandte Fensteraußenseite 123 auf.

Das Türfenster 119 weist einen umlaufenden Fensterrand 125 auf, welcher in einem geschlossenen Zustand der Gerätetür 117 an einem in der Fig. 2A und Fig. 2B nicht dargestellten die Gehäuseöffnung 115 begrenzenden Öffnungsrand des Gehäuses 103 des Wäschepflegegeräts 100 anliegt.

Der umlaufende Fensterrand 125 weist insbesondere zumindest eine Ausnehmung 126 auf, und weist insbesondere zwei Ausnehmungen 126 auf, welche insbesondere einander gegenüberliegend in dem umlaufenden Fensterrand 125 geformt sind.

Der umlaufende Fensterrand 125 weist einen einer Oberseite 109 des Wäschepflegegeräts 100 zugewandten oberen Randbereich 125-1 und einen einer Unterseite 111 des Wäschepflegegeräts 100 zugewandten unteren Randbereich 125-2 auf.

Das Türfenster 119 weist ferner einen nach innen gewölbten Mittelbereich 127 auf, welcher sich in einem geschlossenen Zustand der Gerätetür 117 durch die in den Figuren 2A und 2B nicht gezeigte Gehäuseöffnung 115 in den Geräteinnenraum 105 erstreckt.

Der Mittelbereich 127 des Türfensters 119 weist eine rückseitige Wandung 129 auf. Die rückseitige Wandung 129 ist durch einen Verbindungsbereich 131 des Türfensters 119 mit dem umlaufenden Fensterrand 125 des Türfensters 119 verbunden. In einem geschlossenen Zustand der Gerätetür 117 erstreckt sich der Verbindungsbereich 131 durch die Gehäuseöffnung 115 in den Geräteinnenraum 105.

Der Verbindungsbereich 131 weist einen oberen Verbindungsabschnitt 131-1 auf, welcher den Mittelbereich 127 mit dem oberen Randbereich 125-1 des Fensterrands 125 verbindet. Der Verbindungsbereich 131 weist einen unteren Verbindungsabschnitt 131-2 auf, welcher den Mittelbereich 127 mit dem unteren Randbereich 125-2 verbindet.

Insbesondere sind der obere Verbindungsabschnitt 131-1 gegenüber dem oberen Randbereich 125-1 und der untere Verbindungsabschnitt 131-2 gegenüber dem unteren Randbereich 125-2 unterschiedlich stark geneigt.

Das Türfenster 119 ist aus einem lichttransparenten Glas geformt, welches insbesondere Kalknatron und/oder Borosilikat umfasst.

Insbesondere sind der Fensterrand 125 und/oder der Mittelbereich 127, insbesondere der obere Verbindungsabschnitt 131-1, der untere Verbindungsabschnitt 131-2 und/oder die rückseitige Wandung 129, aus einem lichttransparenten Glas geformt.

Die Gerätetür 117 weist ferner eine lichttransparente Kunststoffschicht 135 auf, welche auf der Fensteraußenseite 123 des Türfensters 119 aufgebracht ist. Die lichttransparente Kunststoffschicht 135 bedeckt die Fensteraußenseite 123 des Türfensters 119 zumindest abschnittsweise, insbesondere vollständig. Die lichttransparente Kunststoffschicht 135 umfasst insbesondere Polyurethan, Polymethylmethacrylat (PMMA), Styrolmethylmethacrylat (SMMA), Polycarbonat und/oder Styrol-Acrylnitril (SAN).

Die lichttransparente Kunststoffschicht 135 ist insbesondere als eine gehärtete Kunststoffschicht 135 ausgebildet ist, wobei die gehärtete Kunststoffschicht 135 insbesondere kratzfest ist.

Die lichttransparente Kunststoffschicht 135 ist insbesondere als eine lichttransparente Kunststofffolie, als ein lichttransparenter Kunststofflack, als ein lichttransparentes Kunststoffharz, als eine lichttransparente Kunststoffspritzgussschicht und/oder als ein lichttransparenter Kunststoffschaum ausgebildet.

Die lichttransparente Kunststoffschicht 135 ist als ein die Gehäuseöffnung 115 umlaufendes Außendichtelement geformt, um in einem geschlossenen Zustand der Gerätetür 117 den Austritt von Waschflüssigkeit aus der Gehäuseöffnung 115 zu reduzieren.

Die lichttransparente Kunststoffschicht 135 ist insbesondere auf der Fensteraußenseite 123 des umlaufenden Fensterrands 125, insbesondere auf dem oberen Randbereich 125-1 und/oder dem unteren Randbereich 125-2, aufgebracht.

Die lichttransparente Kunststoffschicht 135 ist insbesondere auf der Fensteraußenseite 123 des Mittelbereichs 127, insbesondere der rückseitigen Wandung 129 und/oder des Verbindungsbereichs 131 aufgebracht. Insbesondere ist die lichttransparente Kunststoffschicht 135 auf der Fensteraußenseite 123 des oberen Verbindungsabschnitts 131-1 und/oder des unteren Verbindungsabschnitts 131-2 aufgebracht.

Das Türfenster 119 der Gerätetür 117, welches aus Gründen der chemischen, mechanischen und optischen Eigenschaften aus Glas, insbesondere Kalknatron oder Borosilikat, besteht, wird zur Fensteraußenseite 123 mit der lichttransparenten Kunststoffschicht 135 überzogen. Diese als Schutzschicht ausgebildete Kunststoffschicht 135 schützt das Glas von außen gegen mechanische Stöße und reduziert so die Bruchgefahr. Darüber hinaus hält die Kunststoffschicht 135 im Falle eines Bruches die Einzelteile zusammen und verhindert so eine Verletzungsgefahr durch Splitter oder einen offenen Eingriff in die rotierende Trommel. Des Weiteren bietet die Kunststoffschicht 135 eine zusätzliche Schutzschicht bezüglich der Erwärmung des Glases bei hohen Waschtemperaturen, um so die Berührungstemperaturen relativ niedrig zu halten.

Das mit der Kunststoffschicht 135 beschichtete Glas des Türfensters 119 weist Vorteile auf, da ein zusätzliches Bauteil, z.B. Vorglas, mit eigenen Wergzeugen und Montageschritten auch für Geräte mit hoher Wasch-, bzw. Trockentemperatur entfällt, bzw. die Kunststoffbeschichtung 135 ein Ratiopotential gegenüber herkömmlichen Vorgläsern darstellt.

Ferner bietet die Kunststoffschicht 135 einen deutlich erweiterten Schutz gegenüber Verletzungen bei Glasbruch, da sie im Falle von Spannungsrissen oder anderen Glasschäden die Bruchstücke zusammenhält und somit das Risiko von Schnittverletzungen deutlich reduziert.

Im Fall eines Glasbruches bleibt die Waschmaschine durch die Kunststoffschicht 135 nach außen abgedichtet, damit wird der Schutz vor Wasserschäden erhöht.

Zudem bietet die Kunststoffschicht 135 Schutz vor Kratzern auf dem Glas beim Transport und während der Montage.

Insbesondere ist eine dem Geräteaußenraum 107 des Wäschepfleggeräts 100 zugewandte Kunststoffschichtaußenseite 133 der Kunststoffschicht 135 von dem Geräteaußenraum 107 aus direkt zugänglich.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### Bezugszeichenliste

- 100: Wäschepflegegerät
- 101: Einspülschale
- 103: Gehäuse
- 105: Gehäuseinnenraum
- 107: Gehäuseaußenraum
- 109: Oberseite
- 111: Unterseite
- 113: Vorderseite
- 115: Gehäuseöffnung
- 117: Gerätetür
- 119: Türfenster
- 121: Fensterinnenseite
- 123: Fensteraußenseite
- 125: Umlaufender Fensterrand
- 125-1: Oberer Randbereich
- 125-2: Unterer Randbereich
- 127: Mittelbereich
- 129: Rückseitige Wandung
- 131: Verbindungsbereich
- 131-1: Oberer Verbindungsabschnitt
- 131-2: Unterer Verbindungsabschnitt
- 133: Kunststoffschichtaußenseite
- 135: Kunststoffschicht

## Patentansprüche

1. Wäschepflegegerät (100) mit einem Gehäuse (103), welches einen Gehäuseinnenraum (105) von einem Gehäuseaußenraum (107) abgrenzt, wobei das Gehäuse (103) eine Gehäuseöffnung (115) aufweist, und einer Gerätetür (117), welche ausgebildet ist, die Gehäuseöffnung (115) zu verschließen, wobei die Gerätetür (117) ein Türfenster (119) aufweist, welches aus einem lichttransparenten Glas geformt ist, **dadurch gekennzeichnet, dass**
die Gerätetür (117) eine lichttransparente Kunststoffschicht (135) aufweist, welche auf einer dem Gehäuseaußenraum (107) zugewandten Fensteraußenseite (123) des Türfensters (119) aufgebracht ist und einen wirksamen Schutz gegen Verletzungen durch Glasbruch sicherstellt,
wobei die lichttransparente Kunststoffschicht (135) als ein die Gehäuseöffnung (115) umlaufendes Außendichtelement geformt ist, um in einem geschlossenen Zustand der Gerätetür (117) den Austritt von Waschflüssigkeit aus der Gehäuseöffnung (115) zu reduzieren.

2. Wäschepflegegerät (100) nach Anspruch 1, **dadurch gekennzeichnet, dass** die lichttransparente Kunststoffschicht (135) die Fensteraußenseite (123) zumindest abschnittsweise, insbesondere vollständig, bedeckt.

3. Wäschepflegegerät (100) nach Anspruch 1 oder 2, **dadurch gekennzeichnet, dass** die lichttransparente Kunststoffschicht (135) als eine lichttransparente Kunststofffolie, als ein lichttransparenter Kunststofflack, als ein lichttransparentes Kunststoffharz, als eine lichttransparente Kunststoffspritzgussschicht und/oder als ein lichttransparenter Kunststoffschaum ausgebildet ist.

4. Wäschepflegegerät (100) nach einem der vorangehenden Ansprüche, **dadurch gekennzeichnet, dass** die lichttransparente Kunststoffschicht (135) Polyurethan, Polymethylmethacrylat (PMMA), Styrolmethylmethacrylat (SMMA), Polycarbonat und/oder Styrol-Acrylnitril (SAN) umfasst.

5. Wäschepflegegerät (100) nach einem der vorangehenden Ansprüche, **dadurch gekennzeichnet, dass** das lichttransparente Glas des Türfensters (119) Kalknatron und/oder Borosilikat umfasst.

6. Wäschepflegegerät (100) nach einem der vorangehenden Ansprüche, **dadurch gekennzeichnet, dass** das Türfenster (119) einen umlaufenden Fensterrand (125) aufweist, welcher in einem geschlossenen Zustand der Gerätetür (117) an einem die Gehäuseöffnung (115) begrenzenden Öffnungsrand des Gehäuses (103) anliegt, wobei die lichttransparente Kunststoffschicht (135) insbesondere auf einer dem Gehäuseaußenraum (107) zugewandten Fensteraußenseite (123) des umlaufenden Fensterrands (125) aufgebracht ist.

7. Wäschepflegegerät (100) nach Anspruch 6, **dadurch gekennzeichnet, dass** der umlaufende Fensterrand (125) zumindest eine Ausnehmung (126) aufweist, wobei der umlaufende Fensterrand (125) insbesondere zwei Ausnehmungen (126) aufweist, welche insbesondere einander gegenüberliegend in dem umlaufenden Fensterrand (125) geformt sind.

8. Wäschepflegegerät (100) nach einem der vorangehenden Ansprüche, **dadurch gekennzeichnet, dass** das Türfenster (119) einen nach innen gewölbten Mittelbereich (127) aufweist, welcher sich in einem geschlossenen Zustand der Gerätetür (117) durch die Gehäuseöffnung (115) in den Gehäuseinnenraum (105) erstreckt, wobei die lichttransparente Kunststoffschicht (135) insbesondere auf einer dem Gehäuseaußenraum (107) zugewandten Fensteraußenseite (123) des Mittelbereichs (127) aufgebracht ist.

9. Wäschepflegegerät (100) nach Anspruch 8, **dadurch gekennzeichnet, dass** der Mittelbereich (127) des Türfensters (119) eine rückseitige Wandung (129) aufweist, wobei die rückseitige Wandung (129) durch einen Verbindungsbereich (131) des Türfensters (119) mit einem umlaufenden Fensterrand (125) des Türfensters (119) verbunden ist, wobei sich der Verbindungsbereich (131) in einem geschlossenen Zustand der Gerätetür (117) durch die Gehäuseöffnung (115) in den Gehäuseinnenraum (105) erstreckt, wobei die lichttransparente Kunststoffschicht (135) insbesondere auf dem Verbindungsbereich (131), dem umlaufenden Fensterrand (125) und/oder der rückseitigen Wandung (129) aufgebracht ist.

10. Wäschepflegegerät (100) nach einem der Ansprüche 6 bis 9, **dadurch gekennzeichnet, dass** der umlaufende Fensterrand (125) einen einer Oberseite (109) des Wäschepflegegeräts (100) zugewandten oberen Randbereich (125-1) und einen einer Unterseite (111) des Wäschepflegegeräts (100) zugewandten unteren Randbereich (125-2) aufweist, wobei der Verbindungsbereich (131) einen oberen Verbindungsabschnitt (131-1) aufweist, welcher den Mittelbereich (127) mit dem oberen Randbereich (125-1) verbindet, und einen unteren Verbindungsabschnitt (131-2) aufweist, welcher den Mittelbereich (127) mit dem unteren Randbereich (125-2) verbindet, wobei die lichttransparente Kunststoffschicht (135) insbesondere auf dem oberen Verbindungsabschnitt (131-1), dem unteren Verbindungsabschnitt (131-2), dem oberen Randbereich (125-1) und/oder dem unteren Randbereich (125-2) aufgebracht ist.

11. Wäschepflegegerät (100) nach Anspruch 10, **dadurch gekennzeichnet, dass** der obere Verbindungsabschnitt (131-1) gegenüber dem oberen Randbereich (125-1) und der untere Verbindungsabschnitt (131-2) gegenüber dem unteren Randbereich (125-2) unterschiedlich stark geneigt sind.

12. Wäschepflegegerät (100) nach einem der Ansprüche 6 bis 11, **dadurch gekennzeichnet, dass** der Fensterrand (125) und/oder der Mittelbereich (127), insbesondere der obere Verbindungsabschnitt (131-1), der untere Verbindungsabschnitt (131-2) und/oder die rückseitige Wandung (129), des Türfensters (119) aus einem lichttransparenten Glas geformt.

13. Wäschepflegegerät (100) nach einem der vorangehenden Ansprüche, **dadurch gekennzeichnet, dass** das Türfenster (119) eine konkave Form aufweist.

14. Wäschepflegegerät (100) nach einem der vorangehenden Ansprüche, **dadurch gekennzeichnet, dass** eine dem Geräteaußenraum (107) des Wäschepfleggeräts (100) zugewandte Kunststoffschichtaußenseite (133) der Kunststoffschicht (135) von dem Geräteaußenraum (107) aus direkt zugänglich ist.

## Claims

1. Laundry care device (100) with a housing (103), which delimits a housing interior space (105) from a housing exterior space (107), wherein the housing (103) has a housing opening (115), and a device door (117), which is embodied to seal off the housing opening (115), wherein the device door (117) has a door window (119) which is formed from a light-transparent glass,
**characterised in that**
the device door (117) has a light-transparent plastic layer (135), which is applied to a window exterior (123), facing the housing exterior space (107), of the door window (119) and ensures effective protection against damage from glass breakage,
wherein the light-transparent plastic layer (135) is formed as an external sealing element which surrounds the housing opening (115), in order to reduce the exit of washing liquid from the housing opening (115) in a closed state of the device door (117).

2. Laundry care device (100) according to claim 1, **characterised in that** the light-transparent plastic layer (135) covers the window exterior side (123) at least in sections, in particular fully.

3. Laundry care device (100) according to claim 1 or 2, **characterised in that** the light-transparent plastic layer (135) is embodied as a light-transparent plastic film, as a light-transparent plastic coating, as a light-transparent plastic resin, as a light-transparent plastic injection moulded layer and/or as a light-transparent plastic foam.

4. Laundry care device (100) according to one of the preceding claims, **characterised in that** the light-transparent plastic layer (135) comprises polyurethane, polymethyl methacrylate (PMMA), styrene methyl methacrylate (SMMA), polycarbonate and/or styrene acrylonitrile (SAN).

5. Laundry care device (100) according to one of the preceding claims, **characterised in that** the light-transparent glass of the door window (119) comprises soda-lime and/or borosilicate.

6. Laundry care device (100) according to one of the preceding claims, **characterised in that** the door window (119) has a circumferential window edge (125), which, in a closed state of the device door (117), rests against an opening edge, bounding the housing opening (115), of the housing (103), wherein the light-transparent plastic layer (135) is applied in particular to a window exterior (123) of the circumferential window edge (125) facing the housing exterior space (107).

7. Laundry care device (100) according to claim 6, **characterised in that** the circumferential window edge (125) has at least one recess (126), wherein the circumferential window edge (125) has in particular two recesses (126), which are moulded in the circumferential window edge (125) in particular facing one another.

8. Laundry care device (100) according to one of the preceding claims, **characterised in that** the door window (119) has an inwardly arched middle area (127), which, in a closed state of the device door (117), extends through the housing opening (115) into the housing interior space (105), wherein the light-transparent plastic layer (135) is applied in particular to a window exterior (123) of the middle area (127) facing the housing exterior space (107).

9. Laundry care device (100) according to claim 8, **characterised in that** the middle area (127) of the door window (119) has a rear wall (129), wherein the rear wall (129) is connected to a circumferential window edge (125) of the door window (119) by means of a connection region (131) of the door window (119), wherein the connection region (131), in a closed state of the device door (117), extends through the housing opening (115) into the housing interior space (105), wherein the light-transparent plastic layer (135) is in particular applied to the connection region (131), the circumferential window edge (125) and/or the rear wall (129).

10. Laundry care device (100) according to one of claims 6 to 9, **characterised in that** the surrounding window edge (125) has an upper edge region (125-1) facing a top side (109) of the laundry care appliance (100), and a lower edge region (125-2) facing a lower side (111) of the laundry care appliance (100), wherein the connection region (131) has an upper connection section (131-1), which connects the middle area (127) with the upper edge region (125-1) and a lower connection section (131-2) which connects the middle area (127) with the lower edge region (125-2), wherein the light-transparent plastic layer (135) is applied in particular to the upper connection section (131-1), the lower connection section (131-2), the upper edge region (125-1) and/or the lower edge region (125-2).

11. Laundry care device (100) according to claim 10, **characterised in that** the upper connection section (131-1) and the lower connection section (131-2) are inclined to differing degrees with respect to the upper edge region (125-1) and the lower edge region (125-1) in each instance.

12. Laundry care device (100) according to one of claims 6 to 11, **characterised in that** the window edge (125) and/or the middle area (127), in particular the upper connection section (131-1), the lower connection section (131-2) and/or the rear wall (129), of the door window (119) is/are formed from a light-transparent glass.

13. Laundry care device (100) according to one of the preceding claims, **characterised in that** the door window (119) has a concave shape.

14. Laundry care device (100) according to one of the preceding claims, **characterised in that** a plastic layer exterior (133), facing the device exterior space (107) of the laundry care device (100) of the plastic layer (135) is directly accessible from the device exterior space (107).

## Revendications

1. Appareil d'entretien du linge (100) avec une carcasse (103), laquelle délimite un espace intérieur de carcasse (105) d'un espace extérieur de carcasse (107), dans lequel la carcasse (103) présente un orifice de carcasse (115), et une porte d'appareil (117), formée afin d'obturer l'orifice de carcasse (115), dans lequel la porte d'appareil (117) présente une fenêtre de porte (119) formée en un verre transparent à la lumière, **caractérisé en ce que** la porte d'appareil (117) présente une couche de plastique transparente à la lumière (135) apposée sur un côté extérieur de fenêtre (123) de la fenêtre de porte (119) dirigé vers l'espace extérieur de carcasse (107) et qui assure une protection efficace contre les blessures par bris de verre, dans lequel la couche de plastique transparente à la lumière (135) est formée sous la forme d'un élément d'étanchéité extérieure périphérique de l'orifice de carcasse (115), afin de réduire dans un état fermé de la porte d'appareil (117) la sortie de liquide de lavage au départ de l'orifice de carcasse (115).

2. Appareil d'entretien du linge (100) selon la revendication 1, **caractérisé en ce que** la couche de plastique transparente à la lumière (135) couvre au moins par sections, en particulier intégralement, le côté extérieur de fenêtre (123).

3. Appareil d'entretien du linge (100) selon la revendication 1 ou 2, **caractérisé en ce que** la couche de plastique transparente à la lumière (135) est formée sous la forme d'un film plastique transparent à la lumière, d'un vernis plastique transparent à la lumière, d'une résine plastique transparente à la lumière, d'une couche plastique moulée par injection transparente à la lumière et/ou d'une mousse plastique transparente à la lumière.

4. Appareil d'entretien du linge (100) selon l'une des revendications précédentes, **caractérisé en ce que** la couche de plastique transparente à la lumière (135) comprend du polyuréthane, du polyméthacrylate de méthyle (PMMA), du styrène-méthyl méthacrylate (SMMA), du polycarbonate et/ou du styrène-acrylonitrile (SAN).

5. Appareil d'entretien du linge (100) selon l'une des revendications précédentes, **caractérisé en ce que** le verre transparent à la lumière de la fenêtre de porte (119) comprend de la soude calcique et/ou du borosilicate.

6. Appareil d'entretien du linge (100) selon l'une des revendications précédentes, **caractérisé en ce que** la fenêtre de porte (119) présente un bord de fenêtre périphérique (125) contigu, dans un état fermé de la porte d'appareil (117), à un bord d'orifice de la carcasse (103) délimitant l'orifice de carcasse (115), dans lequel la couche de plastique transparente à la lumière (135) est en particulier apposée sur un côté extérieur de fenêtre (123) du bord de fenêtre périphérique (125) dirigé vers l'espace extérieur de carcasse (107).

7. Appareil d'entretien du linge (100) selon la revendication 6, **caractérisé en ce que** le bord de fenêtre périphérique (125) présente au moins un évidement (126), dans lequel le bord de fenêtre périphérique (125) présente en particulier deux évidements (126), lesquels sont en particulier formés l'un face à l'autre dans le bord de fenêtre périphérique (125).

8. Appareil d'entretien du linge (100) selon l'une des revendications précédentes, **caractérisé en ce que** la fenêtre de porte (119) présente une zone centrale bombée vers l'intérieur (127) qui s'étend, dans un état fermé de la porte d'appareil (117), à travers l'orifice de carcasse (115) dans l'espace intérieur de carcasse (105), dans lequel la couche de plastique transparente à la lumière (135) est en particulier apposée sur un côté extérieur de fenêtre (123) de la zone centrale (127) dirigé vers l'espace extérieur de carcasse (107).

9. Appareil d'entretien du linge (100) selon la revendication 8, **caractérisé en ce que** la zone centrale (127) de la fenêtre de porte (119) présente une paroi arrière (129), dans lequel la paroi arrière (129) est reliée, via une zone de liaison (131) de la fenêtre de porte (119), à un bord de fenêtre périphérique (125) de la fenêtre de porte (119), dans lequel la zone de liaison (131) s'étend, dans un état fermé de la porte d'appareil (117), à travers l'orifice de carcasse (115) dans l'espace intérieur de carcasse (105), dans lequel la couche de plastique transparente à la lumière (135) est en particulier apposée sur la zone de liaison (131), le bord de fenêtre périphérique (125) et/ou la paroi arrière (129).

10. Appareil d'entretien du linge (100) selon l'une des revendications 6 à 9, **caractérisé en ce que** le bord de fenêtre périphérique (125) présente une zone périphérique supérieure (125-1) dirigée vers un côté supérieur (109) de l'appareil d'entretien du linge (100) et une zone périphérique inférieure (125-2) dirigée vers un côté inférieur (111) de l'appareil d'entretien du linge (100), dans lequel la zone de liaison (131) présente une section de liaison supérieure (131-1), laquelle relie la zone centrale (127) à la zone périphérique supérieure (125-1), et une section de liaison inférieure (131-2), laquelle relie la zone centrale (127) à la zone périphérique inférieure (125-2), dans lequel la couche de plastique transparente à la lumière (135) est en particulier apposée sur la section de liaison supérieure (131-1), la section de liaison inférieure (131-2), la zone périphérique supérieure (125-1) et/ou la zone périphérique inférieure (125-2).

11. Appareil d'entretien du linge (100) selon la revendication 10, **caractérisé en ce que** la section de liaison supérieure (131-1) et la section de liaison inférieure (131-2) sont respectivement inclinées différemment par rapport à la zone périphérique supérieure (125-1) et la zone périphérique inférieure (125-2).

12. Appareil d'entretien du linge (100) selon l'une des revendications 6 à 11, **caractérisé en ce que** le bord de fenêtre (125) et/ou la zone centrale (127), en particulier la section de liaison supérieure (131-1), la section de liaison inférieure (131-2) et/ou la paroi arrière (129), de la fenêtre de porte (119) est/sont formé(e)s en un verre transparent à la lumière.

13. Appareil d'entretien du linge (100) selon l'une des revendications précédentes, **caractérisé en ce que** la fenêtre de porte (119) présente une forme concave.

14. Appareil d'entretien du linge (100) selon l'une des revendications précédentes, **caractérisé en ce qu'**un côté extérieur de couche de plastique (133) de la couche de plastique (135) dirigé vers l'espace extérieur d'appareil (107) de l'appareil d'entretien du linge (100) est directement accessible au départ de l'espace extérieur d'appareil (107).
